# EUROPÄISCHE PATENTSCHRIFT

(11) **EP 2 434 229 B1**
(45) Veröffentlichungstag und Bekanntmachung des Hinweises auf die Patenterteilung: **15.05.2013**
(21) Anmeldenummer: 10010122.9
(22) Anmeldetag: 22.09.2010
(51) Int. Cl.: F24J 2/52

(54) **Dachhaken zur Montage von Solaranlagenmodulen auf Dächern**
Roof hook for fitting solar modules on roofs
Crochet de toit pour le montage de modules solaires sur des toits

(43) Veröffentlichungstag der Anmeldung: 28.03.2012
(73) Patentinhaber: Kieselbach Solar GmbH, 59494 Soest (DE)
(72) Erfinder: Esken, Manfred, 59494 Soest (DE)
(74) Vertreter: Schweiger, Johannes

(56) Entgegenhaltungen:
- EP-A1- 0 881 339
- DE-A1- 10 246 935
- DE-U1- 20 119 478
- DE-U1-202005 019 897
- DE-U1-202008 016 000
- DE-U1-202009 002 134
- DE-U1-202010 001 175

## Beschreibung

Die Erfindung betrifft einen Dachhaken zur Montage von Solaranlagenmodulen auf Dächern, mit einem sich in X- und Y-Richtung erstreckenden ersten Befestigungsabschnitt zur Festlegung des Dachhakens am Dach, einen im wesentlichen senkrecht zum ersten Befestigungsabschnitt in Z-Richtung von diesem verlaufenden zweiten Befestigungsabschnitt und einer hakenförmigen Halterung zur Festlegung eines Solaranlagenmoduls oder eines Befestigungsprofils für Solaranlagenmodule.

Bekannte Dachhaken weisen in ihrem Befestigungsabschnitt mehrere Bohrungen zur Aufnahme von Befestigungsschrauben auf. Die DE 20 2008 016 000 U1 zeigt einen geteilt ausgebildeten Dachhaken und die EP 0881339 A1 offenbart einen Sicherheitsdachhaken. Mittels der Befestigungsschrauben wird der Dachhaken auf dem Dach, insbesondere an unter den Dachpfannen liegenden Dachplatten, befestigt. Der hakenförmige Halterabschnitt ragt unter den Dachpfannen auf der Dachoberseite hervor. An dem Halteabschnitt werden, in der Regel mit Befestigungsschrauben, die Solaranlagenmodule direkt oder indirekt über Befestigungsprofile befestigt. Die bekannten Dachhaken sind zumeist integral ausgebildet und werden in der Regel aus zwei Teilstücken, nämlich dem Befestigungsabschnitt und dem Halteabschnitt zusammengeschweißt. Nachteilig bei dem bekannten Dachhaken ist die umständliche Montage auf Grund von schlecht erreichbaren Befestigungselementen sowie fehlende oder unzureichende Einstellmöglichkeiten der Dachhaken auf unterschiedliche Dachpfannen und/oder unterschiedliche Solaranlagenmodule beziehungsweise Befestigungsprofile für Solaranlagenmodule.

Der Erfindung liegt die Aufgabe zugrunde, einen verbesserten Dachhaken vorzuschlagen, der leicht erreichbare Befestigungselemente aufweist und eine schnellere und einfachere Montage ermöglicht.

Diese Aufgabe wird mit den Merkmalen des Anspruchs 1 gelöst.

Vorteilhafte Ausgestaltungen der Erfindung sind in den Unteransprüchen angegeben.

Erfindungsgemäß ist vorgesehen, den Dachhaken modular aus mindestens zwei Bauelementen herzustellen. Die integral am jeweiligen Bauelement ausgebildeten Befestigungsflächen werden dabei durch ein Verbindungselement kraftschlüssig, insbesondere formschlüssig, mit der Halterung verbunden. Im Gegensatz zu den bekannten verstellbaren Dachhaken kann der erfindungsgemäße Dachhaken über ein einzelnes, gut erreichbares Verbindungselement verstellt/eingestellt und den Dachpfannen entsprechend angepasst werden, was die Montage der Solaranlagenmodule hoch oben auf Dächern wesentlich erleichtert. Hierdurch wird es erfindungsgemäß ermöglicht, mit einem einheitlichen ersten Bauelement verschiedenste Typen von Dachmontagesystemen zu realisieren.

Ein wesentlicher Vorteil wird dadurch erreicht, dass der erfindungsgemäße Dachhaken im Wesentlichen senkrecht zu der Dachfläche beziehungsweise zum ersten Befestigungsabschnitt verstellbar ist, so dass eine an den Dachhaken angrenzende Lage an Dachpfannen nicht beeinflusst wird, wie es bei einer diagonalen Verstellbarkeit der Fall wäre.

Ein weiterer wesentlicher Vorteil der Erfindung ist darin zu sehen, dass das für die Verstellung der Halterung in senkrechter Richtung zur Dachfläche vorgesehene Befestigungselement nicht parallel zur Dachfläche, also orthogonal zur Verstellrichtung angeordnet ist, sondern schräg in Richtung der Halterung geneigt ist. Auf diese Weise ist das Befestigungselement leicht zu erreichen, was eine Montage stark erleichtert.

Der erfindungsgemäße Dachhaken zeigt einen sich in X- und Y-Richtung erstreckenden ersten Befestigungsabschnitt mit Bohrungen für Verbindungselemente, insbesondere Schrauben, zur Festlegung des Dachhakens auf dem Dach. Außerdem weist der Dachhaken einen im wesentlichen senkrecht zum ersten Befestigungsabschnitt in Z-Richtung von diesem verlaufenden zweiten Befestigungsabschnitt auf, an dem eine hakenförmige Halterung zur Festlegung eines Solaranlagenmoduls oder eines Befestigungsprofils für Solaranlagenmodule befestigt ist, wobei die Halterung an dem zweiten Befestigungsabschnitt in Z-Richtung verstellbar ist, und wobei zur Z-Richtung schräg wirkende Befestigungsmittel zur Festlegung der Halterung an dem Befestigungsabschnitt vorgesehen sind.

In Ausgestaltung der Erfindung ist mit Vorteil vorgesehen, dass die Halterung für die Solaranlagenmodule einen Übergangsschenkel aufweist, der in etwa parallel zum zweiten Befestigungsabschnitt angeordnet ist. An den Übergangsschenkel schließt ein U-förmiger Hakenabschnitt an. Dieser Hakenabschnitt besteht aus einem parallel zur Ebene des ersten Befestigungsabschnitts verlaufenden Stützschenkel, an dem ein sich in etwa in Z-Richtung erstreckender Bodenschenkel anschließt. Der Bodenschenkel verläuft in etwa parallel zu dem Übergangsschenkel. Der Bodenschenkel wiederum mündet in einem parallel zur Ebene des ersten Befestigungsabschnitts verlaufenden Fixierschenkel.

Die Deckplatten werden in dem U-förmigen Hakenabschnitt aufgenommen und an dem Fixierschenkel gesichert. Der Fixierschenkel wiederum mündet in einem Montageschenkel, der sich im wesentlichen in Z-Richtung erstreckt und für die Festlegung eines Solarmoduls oder eines Befestigungsprofils für Solaranlagenmodule vorgesehen ist.

Mit Vorteil ist der Montageschenkel mit einem zur Verstellung dienenden Langloch vorgesehen. In dem Langloch ist eine Befestigungsschraube zur Fixierung des Solaranlagenmoduls beziehungsweise des Befestigungsprofils aufnehmbar und verstellbar. Durch Ausgestaltung des Loches als Langloch können Toleranzen auf einfache Weise ausgeglichen werden. Anstelle des als Langloch ausgebildeten Montagelochs können auch Rundlöcher vorgesehen sein.

In einer weiteren vorteilhaften Ausführungsform der Erfindung weist der Montageschenkel an einer dem Solarmodul beziehungsweise dessen Befestigungsprofil zugewandten Befestigungsfläche, Eingriffselemente, insbesondere Stege auf, die sich zumindest teilweise in X-Richtung, insbesondere durchgängig von einem Ende der Befestigungsfläche zum gegenüberliegenden Ende, erstrecken. Diese können mit entsprechenden Eingriffselementen an den Solaranlagenmodulen beziehungsweise Befestigungsprofilen für Solaranlagenmodule in Eingriff gebracht werden, um eine kraftschlüssige Fixierung zu gewährleisten.

Gemäß einer Ausführungsform der Erfindung ist vorgesehen, dass der zweite Befestigungsabschnitt an einer der Halterung zugewandten Befestigungsfläche, und der im wesentlichen parallel zu der Befestigungsfläche verlaufende Übergangsschenkel an einer den zweiten Befestigungsabschnitt zugewandten Befestigungsfläche ebenfalls Eingriffselemente, insbesondere Stege, aufweist, die sich zumindest teilweise in X-Richtung, insbesondere durchgängig von einem Ende der Befestigungsflächen zum gegenüberliegenden Ende, erstrecken. Auf diese Weise ist eine kraftschlüssige Festlegung der Halterung an dem zweiten Befestigungsabschnitt über Reib- und Formschluss durch die Befestigungsmittel möglich.

Gemäß einer zweckmäßigen Weiterbildung der Erfindung ist vorgesehen, dass der zweite Befestigungsabschnitt ein sich in X-Richtung erstreckendes, von einem Verbindungselement, insbesondere einer Schraube, der Befestigungsmittel durchsetztes Langloch aufweist, so dass die Halterung horizontal verstellbar ist.

Die vertikale Verstellbarkeit der Halterung, also parallel zum zweiten Befestigungsabschnitt in Z-Richtung wird durch ein Langloch in der Anschlagsfläche des Übergangsschenkels ermöglicht, wobei die der Befestigungsfläche des Übergangschenkels gegenüberliegende Anschlagsfläche der Halterung und die der Befestigungsfläche gegenüberliegende Anschlagsfläche des zweiten Befestigungsabschnitts schräg zur Z-Richtung, im wesentlichen orthogonal zur Wirkungsrichtung der Befestigungsmittel angeordnet sind. Auf diese Weise erstrecken sich die Befestigungsmittel beziehungsweise das Verbindungselement zur Festlegung der Halterung an dem zweiten Befestigungsabschnitt nicht parallel zu dem ersten Befestigungsabschnitt, also in Y-Richtung, sondern sind um einem Winkel α zur Z-Richtung geneigt.

Die Mittelängsachse des Verbindungselements der zur Y- und Z-Richtung schräg wirkenden Befestigungsmittel erstreckt sich unter einem Winkel 0 < α < 60°, insbesondere 10 < α < 40°, vorzugsweise 15 < α < 25°, zur ersten Befestigungsfläche in den von der ersten Befestigungsfläche und der zweiten Befestigungsfläche aufgespannten Raum. Das Verbindungselement ist dadurch leichter zugänglich was die Montage des Dachhakens wesentlich erleichtert.

Der erfindungsgemäße Dachhaken kann also einerseits in Z-Richtung verstellt werden, um die bei Dachpfannen auftretenden Toleranzen auszugleichen oder unterschiedliche Dachpfannentypen verwenden zu können, weist aber andererseits nicht die üblicherweise senkrecht dazu, in Y-Richtung, vorgesehenen Befestigungsmittel auf, sondern ein Befestigungselement, das in Richtung der Halterung geneigt und somit wesentlich leichter zugänglich ist.

Die Herstellung des Dachhakens erfolgt mit Vorteil über das Druckgussverfahren, das gegenüber den sonst üblichen Strangpressverfahren unter anderem auf Grund der Wärmebehandlung eine deutlich höhere Stabilität und geringere Verletzungsgefahr mit sich bringt.

Durch eine einteilige Ausbildung der Halterung aus Aluminiumguss ist es möglich, die Übergänge zwischen dem Übergangsschenkel und dem Stützschenkel, dem Stützschenkel und dem Bodenschenkel sowie dem Bodenschenkel und dem Fixierschenkel als auch dem Fixierschenkel und dem Montageschenkel gebogen auszubilden.

Ein besonders belastbarer Dachhaken wird dadurch erhalten, dass mindestens eine Verstärkungsrippe vorgesehen ist. Insbesondere sind die Verstärkungsrippen im Bereich des Übergangsschenkels angeordnet und erstrecken sind in Y-Richtung aus der Ebene des zweiten Befestigungsabschnitts, insbesondere im Randbereich der Anschlagsfläche des Übergangsschenkels, heraus.

In Ausgestaltung der Erfindung ist vorgesehen, dass sich mindestens eine Verstärkungsrippe, vorzugsweise zwei Verstärkungsrippen, zumindest über einen Teil des Randbereichs der Anschlagsfläche des Übergangsschenkels erstreckt. Hierdurch wird der Übergang zwischen dem zweiten Befestigungsabschnitt, dem Übergangsschenkel und dem Stützschenkel gestärkt. Auf Grund der stabilen Ausgestaltung des Dachhakens werden die Dachziegel entlastet und ein Bruch derselben vermieden. Ein signifikantes Durchbiegen in Z-Richtung wird bei den auftretenden Auflagelasten somit praktisch ausgeschlossen.

Der Übergangsbereich von dem zweiten Befestigungsabschnitt zu der Halterung kann weiter dadurch stabilisiert werden, dass die Höhe und/oder die Breite der sich entlang des Randbereichs der Anschlagsfläche des Übergangsschenkels erstreckenden Verstärkungsrippen in Richtung des ersten Befestigungsabschnitts, also in Z-Richtung zunimmt.

Zur weiteren Erhöhung der Stabilität des Dachhakens kann eine, insbesondere zwei, schräg verlaufende Verstärkungsrippe am ersten Befestigungsabschnitt vorgesehen sein, welche sich entlang der XY-Ebene erstreckt und in Z-Richtung über ihren Verlauf in Richtung des Übergangschenkels zunimmt.

Im Folgenden wird die Erfindung anhand eines in der Zeichnung gezeigten Ausführungsbeispiels näher erläutert. Es zeigen:
- Fig. 1: eine perspektivische Ansicht eines erfindungsgemäßen Dachhakens und
- Fig. 2: eine perspektivische Ansicht des Dachhakens gemäß Fig. 1.

In den Figuren sind gleiche Bauteile und Bauteile mit gleicher Wirkung mit den gleichen Bezugszeichen gekennzeichnet.

In den Figuren ist ein Dachhaken 1 gezeigt. Zur Vereinfachung der Beschreibung der Lage der einzelnen Bestandteile des Dachhakens 1 zueinander, ist in den Figuren ein kartesisches Koordinatensystem mit drei zueinander orthogonal verlaufenden Achsen X, Y und Z eingeführt.

Der erfindungsgemäße Dachhaken 1 weist einen sich in X- und Y-Richtung erstreckenden, in der Draufsicht rechteckigen, ersten Befestigungsabschnitt 2 auf. Der erste Befestigungsabschnitt 2 ist mit zwei parallelen, in X-Richtung verlaufenden Reihen von Befestigungsbohrungen 17 versehen. Diese dienen zur Aufnahme von nicht dargestellten Befestigungsschrauben zur Fixierung des Dachhakens 1 mit seinem ersten Befestigungsabschnitt 2 am Dach.

Neben dem ersten Befestigungsabschnitt 2 weist der Dachhaken 1 einen in der Draufsicht rechteckigen, zweiten Befestigungsabschnitt 3 auf. Der zweite Befestigungsabschnitt 3 erstreckt sich im wesentlichen senkrecht zum ersten Befestigungsabschnitt 2 in Z-Richtung. Der zweite Befestigungsabschnitt 3 weist eine Befestigungsfläche 7 auf, an der eine Halterung 4 mit einer korrespondierenden Befestigungsfläche 9 festlegbar ist. Weiterhin weist der zweite Befestigungsabschnitt 3 ein sich in X-Richtung erstreckendes, von einem Verbindungselement 6 durchsetzbares, Langloch 24 auf, so dass die Halterung 4 horizontal verstellbar ist.

Außerdem weist die Befestigungsfläche 7 in dem Ausführungsbeispiel als Stege 19 ausgestaltete Eingriffselemente auf, die sich in X-Richtung durchgängig von einem Ende der Befestigungsfläche 7 zum gegenüberliegenden Ende erstrecken und mit entsprechenden Stegen 10 der Befestigungsfläche 9 eines Übergangsschenkels 8 der Halterung 4 in Eingriff gebracht werden können.

Die Halterung 4 wird dabei aus dem Übergangsschenkel 8, einem Stützschenkel 18, einem Bodenschenkel 20, einem Fixierschenkel 21 und einem Montageschenkel 13 gebildet. Der Übergangsschenkel 8 mündet in den in Y-Richtung verlaufenden Stützschenkel 18. Der Stützschenkel 18wiederum endet in dem in Z-Richtung verlaufenden Bodenschenkel 20, welcher wiederum in den im Wesentlichen in Y-Richtung entgegengesetzt zum Stützschenkel 18 verlaufenden, weitestgehend parallel zum Stützschenkel 18 angeordneten Fixierschenkel 21 mündet. Der Fixierschenkel 21 erstreckt sich bis zu dem in Z-Richtung verlaufenden Montageschenkel 13, welcher mit Vorteil ein sich ebenfalls in Z-Richtung erstreckendes Langloch 22 aufweist und für die Festlegung eines Solaranlagenmoduls oder eines Befestigungsprofils für Solaranlagenmodule vorgesehen ist.

In dem Ausführungsbeispiel weist der Montageschenkel 13 an der dem Solaranlagenmodul oder dem Befestigungsprofil für Solaranlagenmodule zugewandten Befestigungsfläche 14 Stege 10 auf, die sich durchgängig von einem Ende der Befestigungsfläche 14 zum gegenüberliegenden Ende in X-Richtung erstrecken und für den kraftschlüssigen Eingriff mit einem korrespondierenden Profil eines nicht gezeigten Solaranlagenmoduls beziehungsweise eines Befestigungsprofils für Solaranlagenmodule ausgelegt sind.

Ein Winkel β zwischen dem Bodenschenkel 20 und dem Stützschenkel 18 beträgt in dem gezeigten Ausführungsbeispiel etwa 95°.

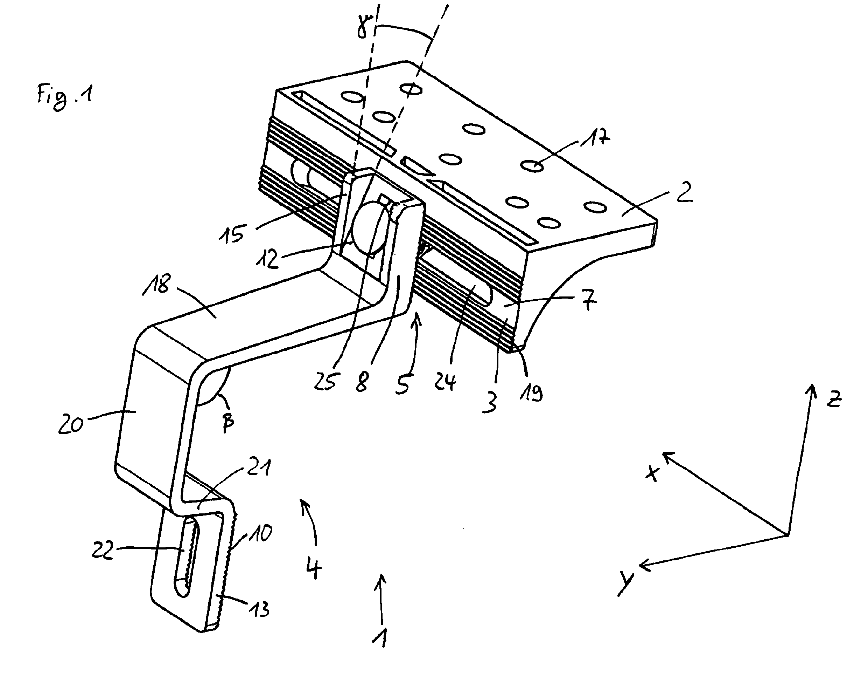

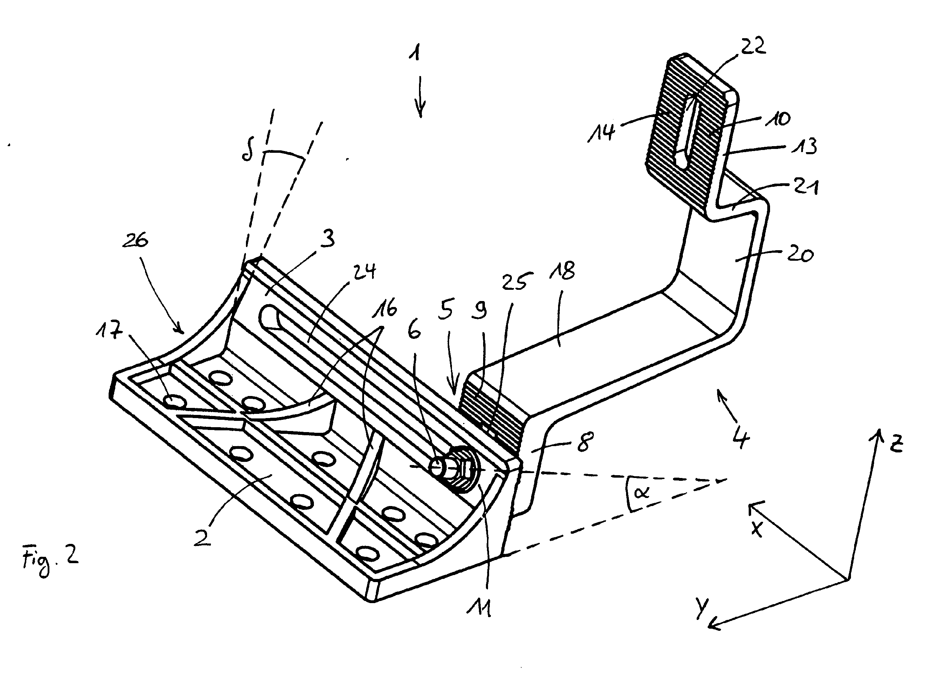

Die Befestigung der Halterung 4 an der Befestigungsfläche 7 des zweiten Befestigungsabschnitts 3 erfolgt gemäß Figur 1 und Figur 2 mittels eines als Schraubverbindung ausgestalteten Verbindungselements 6, welches sich von einer von der Befestigungsfläche 9 abgewandten Anschlagsfläche 12 des Übergangsschenkels 8 durch ein in Z-Richtung verlaufendes Langloch 25 des Übergangsschenkels 8 und das in X-Richtung verlaufende Langloch 24 des zweiten Befestigungsabschnitts 3 erstreckt und an einer von der Befestigungsfläche 7 abgewandten Anschlagsfläche 11 des zweiten Befestigungsabschnitts 3 fixierbar ist. Die Schraubverbindung 6 (Verbindungselement 6) der zur Z-Richtung schräg wirkenden Befestigungsmittel 5 erstreckt sich unter einem Winkel α = 20° zum ersten Befestigungsabschnitt 2 in einem von dem ersten Befestigungsabschnitt 2 und dem zweiten Befestigungsabschnitt 3 aufgespannten Schraubraum 26.

Zur Erhöhung der Stabilität des Dachhakens 1 sind in den Ausführungsbeispielen gemäß Figuren 1, 2 Verstärkungsrippen 15 am Seitenrand der Anschlagsfläche 12 des Übergangsschenkels 8 vorgesehen, welche sich in Z-Richtung entlang des Übergangsschenkels 8 in Richtung des ersten Befestigungsabschnitts 2 und in Y-Richtung aus der Ebene der Befestigungsfläche 7 erstrecken. Die Anschlagsfläche 12 bildet somit eine Rampe zwischen den seitlich angeordneten Verstärkungsrippen 15. Die Anschlagsfläche 12 ist um einen Winkel γ gegenüber der Befestigungsfläche 9 geneigt, der vorzugsweise dem Winkel α entspricht. Die Anschlagsfläche 11 ist um einen Winkel δ gegenüber der Befestigungsfläche 7 geneigt, der vorzugsweise dem Winkel α und/oder dem Winkel γ entspricht.

Zur weiteren Erhöhung der Stabilität des Dachhakens 1 sind zwei schräg zur X- und Y-Richtung verlaufende Verstärkungsrippen 16 am ersten Befestigungsabschnitt 2 vorgesehen, die sich in den Schraubraum 26 erstrecken. Die Ausdehnung der Verstärkungsrippen 16 in Z-Richtung nimmt über deren Verlauf in Richtung des Übergangsschenkels zu. Anders ausgedrückt, schmiegen sich die Verstärkungsrippen 16 an den sich in Z-Richtung erstreckenden zweiten Befestigungsabschnitt 3, bis zum Langloch 24 an. Hierdurch wird eine gleichmäßige Verteilung der auf den Dachhaken 1 wirkenden Last auf die Fläche des ersten Befestigungsabschnitts 2 erreicht.

Wie aus den Figuren ersichtlich ist, sind sämtliche Kanten des Dachhakens 1, außer den Eckkanten der Unterseite des rechteckigen ersten Befestigungsabschnitts 2, abgerundet ausgebildet, um die Verletzungsgefahr zu reduzieren sowie um eine ansprechendere Optik zu erzielen.

Dachhaken zur Montage von Solaranlagenmodulen auf Dächern

### Bezugszeichenliste

- 1: Dachhaken
- 2: erster Befestigungsabschnitt
- 3: zweiter Befestigungsabschnitt
- 4: Halterung
- 5: Befestigungsmittel
- 6: Verbindungselement
- 7: Befestigungsfläche
- 8: Übergangsschenkel
- 9: Befestigungsfläche
- 10: Stege
- 11: Anschlagsfläche
- 12: Anschlagsfläche
- 13: Montageschenkel
- 14: Befestigungsfläche
- 15: Verstärkungsrippe
- 16: Verstärkungsrippe
- 17: Befestigungsbohrungen
- 18: Stützschenkel
- 19: Stege
- 20: Bodenschenkel
- 21: Fixierschenkel
- 22: Langloch
- 24: Langloch
- 25: Langloch
- 26: Schraubraum

## Patentansprüche

1. Dachhaken (1) zur Montage von Solaranlagenmodulen auf Dächern mit einem sich in X- und Y-Richtung erstreckenden ersten Befestigungsabschnitt (2) zur Festlegung eines Dachhakens (1) am Dach, und
einer hakenförmigen Halterung (4) zur Festlegung des Solaranlagenmoduls oder eines Befestigungsprofils für Solaranlagenmodule **dadurch gekennzeichnet, dass**
der Dachhaken einen der Dachhaken senkrecht zum ersten Befestigungsabschnitt (2) in Z-Richtung von diesem verlaufenden zweiten Befestigungsabschnitt (3) aufweist, wobei
die Halterung (4) an dem zweiten Befestigungsabschnitt (3) in Z-Richtung verstellbar ist, und wobei zur Z-Richtung schräg wirkende Befestigungsmittel (5) zur Festlegung der Halterung (4) an dem Befestigungsabschnitt (3) vorgesehen sind.

2. Dachhaken nach Anspruch 1,
**dadurch gekennzeichnet, dass** der zweite Befestigungsabschnitt (3) ein sich in X-Richtung erstreckendes, von einem Verbindungselement (6), insbesondere einer Schraube, der Befestigungsmittel (5) durchsetztes Langloch aufweist, so dass die Halterung (4) horizontal verstellbar ist.

3. Dachhaken nach Anspruch 1,
**dadurch gekennzeichnet, dass** der zweite Befestigungsabschnitt (3) an einer der Halterung (4) zugewandten Befestigungsfläche (7), und ein im wesentlichen parallel zur Befestigungsfläche (7) verlaufender Übergangsschenkel (8) an einer dem zweiten Befestigungsabschnitt (3) zugewandten Befestigungsfläche (9), Eingriffselemente (10), insbesondere Stege, aufweist, die sich zumindest teilweise in X-Richtung, insbesondere durchgängig von einem Ende der Befestigungsflächen (7, 9) zum gegenüberliegenden Ende, erstrecken.

4. Dachhaken nach Anspruch 3,
**dadurch gekennzeichnet, dass** eine der Befestigungsfläche (7) gegenüberliegende Anschlagsfläche (11) des Befestigungsabschnitts (3) und eine der Befestigungsfläche (9) des Übergangsschenkel (8) gegenüberliegende Anschlagsfläche (12) schräg zur Z-Richtung, im wesentlichen orthogonal zur Wirkungsrichtung der Befestigungsmittel (5) angeordnet sind.

5. Dachhaken nach Anspruch 4,
**dadurch gekennzeichnet, dass** die Anschlagsfläche (11) mindestens eine Verstärkungsrippe (15) aufweist.

6. Dachhaken nach Anspruch 2,
**dadurch gekennzeichnet, dass** sich die Mittellängsachse des Verbindungselements (6) der zur Z-Richtung schräg wirkenden Befestigungsmittel (5) unter einem Winkel 0 < α < 60°, insbesondere 10 < α < 40°, vorzugsweise 15 < α < 20°, zum ersten Befestigungsabschnitt (2) in den von der ersten Befestigungsfläche (7) und der zweiten Befestigungsfläche (9) aufgespannten Raum erstreckt.

7. Dachhaken nach Anspruch 3,
**dadurch gekennzeichnet, dass** die Halterung (4) an dem Übergangsschenkel (8) gegenüberliegenden Ende in einen Montageschenkel (13) mündet, insbesondere mit einem zur Verstellung dienenden Langloch, der sich im wesentlichen in Z-Richtung erstreckt und für die Festlegung eines Solaranlagenmoduls oder eines Befestigungsprofils für Solaranlagenmodule vorgesehen ist.

8. Dachhaken nach Anspruch 6,
**dadurch gekennzeichnet, dass** der Montageschenkel (13) der an einer dem Solaranlagenmodul oder eines Befestigungsprofils für Solaranlagenmodule zugewandten Befestigungsfläche (14), Eingriffselemente (10), insbesondere Stege aufweist, die sich zumindest teilweise in X-Richtung, insbesondere durchgängig von einem Ende der Befestigungsfläche (14) zum gegenüberliegenden Ende erstrecken.

## Claims

1. A roof hook (1) for mounting of solar installation modules on roofs with a first fastening section (2) which extends in the X and Y direction for fixing a roof hook (1) on the roof, and a hook-shaped mount (4) for fixing the solar installation module or a fastening profile for solar installation modules **characterized in that** the roof hook has a second fastening section (3) which runs essentially perpendicular to the first fastening section (2) in the Z direction from the latter, wherein the mount (4) being adjustable on the second fastening section (3) in the Z direction, and there being fasteners (5) which act obliquely to the Z direction for fixing the mount (4) on the fastening section (3).

2. The roof hook as claimed in Claim 1, **characterized in that** the second fastening section (3) has a slot which extends in the X direction and which is penetrated by a connecting element (6), especially a screw, of the fasteners (5) so that the mount (4) can be horizontally adjusted.

3. The roof hook as claimed in Claim 1, wherein the second fastening section (3) on one fastening surface (7) facing the mount (4), and a transition leg (8) which runs essentially parallel to the fastening surface (7) on a fastening surface (9) which faces the second fastening section (3) have engagement elements (10), especially ribs, which extend at least partially in the X direction, especially continuously from one end of the fastening surfaces (7, 9) to the opposite end.

4. The roof hook as claimed in Claim 3, wherein a stop surface (11) of the fastening section (3) opposite the fastening surface (7) and a stop surface (11) opposite the fastening surface (9) of the transition leg (8) are arranged obliquely to the Z direction, essentially orthogonally to the direction of action of the fasteners (5).

5. The roof hook as claimed in Claim 4, wherein the stop surface (11) has at least one reinforcing rib (15).

6. The roof hook as claimed in Claim 2, wherein the center longitudinal axis of the connecting element (6) of the fasteners (5) which act obliquely to the Z direction extends at an angle 0 < α 60°, especially 10 < α < 40°, preferably 15 < α < 20°, to the first fastening section (2) in the space which is opened up by the first fastening surface (7) and the second fastening surface (9).

7. The roof hook as claimed in Claim 3, wherein the mount (4) on the end opposite the transition leg (8) ends in a mounting leg (13), in particular with a slot which is used for adjustment, which extends essentially in the Z direction and which is intended for fixing a solar installation module or a fastening profile for solar installation modules.

8. The roof hook as claimed in Claim 6, wherein the mounting leg (13) of one fastening surface (14) facing the solar module or a fastening profile for the solar installation module has engagement elements (10), especially ribs, which extend at least partially in the X direction, especially continuously from one end of the fastening surface (14) to the opposing end.

## Revendications

1. Crochet de toit (1) à des fins de montage de modules d'installations solaires sur des toits, comportant :
une première portion de fixation (2) s'étendant dans la direction X et Y afin d'immobiliser un crochet de toit (1) sur le toit, et
un support en forme de crochet (4) pour immobiliser le module d'installation solaire ou un profilé de fixation pour modules d'installations solaires, **caractérisé en ce que**
le crochet de toit présente une deuxième portion de fixation (3) s'étendant perpendiculairement à la première portion de fixation (2) dans la direction Z de cette dernière, dans lequel
le support (4) est ajustable sur la deuxième portion de fixation (3) dans la direction Z, et dans lequel des moyens de fixation (5) agissant en biais par rapport à la direction Z sont prévus afin d'immobilier le support (4) sur la portion de fixation (3).

2. Crochet de toit selon la revendication 1, **caractérisé en ce que** la deuxième portion de fixation (3) présente un alésage oblong s'étendant dans la direction X, traversé par un élément de liaison (6), notamment une vis, des moyens de fixation (5), de sorte que le support (4) soit ajustable horizontalement.

3. Crochet de toit selon la revendication 1, **caractérisé en ce que** la deuxième portion de fixation (3) présente sur une surface de fixation (7) tournée vers le support (4), et un pan de transition (8) s'étendant essentiellement parallèlement à la surface de fixation (7) sur une surface de fixation (9) tournée vers la deuxième portion de fixation (3), des éléments de mise en prise (10), notamment des gradins, qui s'étendent au moins partiellement dans la direction X, notamment constamment d'une extrémité des surfaces de fixation (7,9) à l'extrémité en vis-à-vis.

4. Crochet de toit selon la revendication 3, **caractérisé en ce que** une surface de butée (11) de la portion de fixation (3), en vis-à-vis de la surface de fixation (7) et une surface de butée (12) en vis-à-vis de la surface de fixation (9) du pan de transition (8) sont disposées en biais par rapport à la direction Z, essentiellement orthogonalement à la direction d'action des moyens de fixation (5).

5. Crochet de toit selon la revendication 4, **caractérisé en ce que** la surface de butée (11) présente au moins une nervure de renforcement (15).

6. Crochet de toit selon la revendication 2, **caractérisé en ce que** l'axe longitudinal médian de l'élément de liaison (6) des moyens de fixation (5à) agissant en biais par rapport à la direction A s'étend à un angle 0<α<60°, notamment 10<α<40°, de préférence 15<α<20°, par rapport à la première portion de fixation (2) dans l'espace délimité par la première surface de fixation (7) et la deuxième surface de fixation (9).

7. Crochet de toit selon la revendication 3, **caractérisé en ce que** le support (4) débouche sur l'extrémité en vis-à-vis du pan de transition (8) dans un pan de montage (13), notamment par un alésage oblong servant à l'ajustage, qui s'étend essentiellement dans la direction Z et est prévu afin d'immobiliser un module d'installation solaire ou un profilé de fixation pour modules d'installations solaires.

8. Crochet de toit selon la revendication 6, **caractérisé en ce que** le pan de montage (13) présente sur une surface de fixation (14) tournée vers le module d'installation solaire ou un profilé de fixation pour modules d'installations solaires des éléments de mise en prise (10), notamment des gradins, qui s'étendent au moins partiellement dans la direction X, notamment constamment d'une extrémité de la surface de fixation (4) à l'extrémité en vis-à-vis.
